# EUROPÄISCHE PATENTSCHRIFT

(11) **EP 1 174 625 B1**
(45) Veröffentlichungstag und Bekanntmachung des Hinweises auf die Patenterteilung: **21.04.2004**
(21) Anmeldenummer: 01117427.3
(22) Anmeldetag: 19.07.2001
(51) Int. Cl.: F15B 13/00, B60L 11/18, F16K 27/00

(54) **Dosierventilanordnung zum Speisen eines gasförmigen Mediums in ein in einem Kraftfahrzeug eingesetztes Brennstoffzellen-System**
Assembly of metering valves for gas supply to fuel cells for car
Assemblage de valves de dosage pour l'alimentation en gaz de piles à combustible pour voiture

(30) Priorität: 22.07.2000 DE 10035763
(43) Veröffentlichungstag der Anmeldung: 23.01.2002
(73) Patentinhaber: Ballard Power Systems AG, 73230 Kirchheim / Teck-Nabern (DE)
(72) Erfinder: Seitz, Joachim, 98231 Neu-Ulm (DE); Sang, Jochen, 73230 Kichheim/Teck (DE)
(74) Vertreter: Beyer, Andreas, Dr.

(56) Entgegenhaltungen:
- WO-A-94/16252
- DE-A- 19 947 254
- GB-A- 1 343 679
- US-A- 4 988 580

## Beschreibung

Die Erfindung betrifft ein BrennstoffzeOen-System. in einem Kraftfahrzeug.

Aus der US-A-4,988,580 ist ein Brennstoffzellen-System mit einem zentralen Gaserzeugungssystem und zwanzig Brennstoffzellen-Energieerzeugern bekannt. Von einer Hauptleitung, die mit dem Gaserzeugungssystem verbunden ist, zweigen Leitungen ab, die jeweils zu einem Brennstoffzellen-Energieerzeuger führen. Dabei regulieren Ventile in den abzweigenden Leitungen den Druck und die Fließgeschwindigkeit des Wasserstoffgases abhängig vom Bedarf des jeweiligen Brennstoffzellen-Energieerzeugers. In Abhängigkeit von einem Energiebedarf werden einzelne Brennstoffzellen-Energieerzeuger an- oder ausgeschaltet. Überschüssiger Wasserstoff wird in dem Leitungssystem unter erhöhtem Druck gespeichert.

Der allgemeine Stand der Technik kennt Kraftfahrzeuge mit Brennstoffzellen-Systemen, welche zumindest einen Teil der Energie, welche in dem Kraftfahrzeug benötigt wird, liefern. Insbesondere sollen hierbei Brennstoffzellen-Systeme erwähnt werden, welche das für den Betrieb der Brennstoffzelle erforderliche wasserstoffhaltige Gas in dem Brennstoffzellen-System aus einem Kohlenwasserstoff selbst erzeugen. Diese sogenannten Gaserzeugungssysteme weisen dabei zahlreiche Einzelkomponenten auf, von welchen hier nur Oxidationsstufen, Reformierungs-Reaktoren und Shift-Stufen exemplarisch genannt werden sollen.

Zahlreiche der Komponenten eines solchen Brennstoffzellen-Systems, insbesondere mit einem integrierten Gaserzeugungssystem, benötigen dabei eine dosierte Zufuhr von gasförmigen Medien, insbesondere von Luft oder einem anderen sauerstoffhaltigen Gas, als Sauerstofflieferant für die chemischen und elektrochemischen Abläufe in dem Brennstoffzellen-System.

Da diese dosierte Zufuhr von gasförmigen Medien im allgemeinen sehr exakt und zu einem gezielten Zeitpunkt in die jeweilige Komponente des Brennstoffzellen-Systems erfolgen muß, weist ein derartiges Brennstoffzellen-System üblicherweise für jede der Komponenten ein eigenes Dosierventil auf. Diese Dosierventile, welche beispielweise über ein Laval-Düsenelement und eine Düsennadel eine gezielte, regelbare Dosierung von gasförmigen Medien erlauben, sind dabei der jeweiligen Komponente zugeordnet. Durch eine Erfassung der wichtigsten Zustandsgrößen, beispielsweise vor dem Dosierventil, erhält man die erforderlichen Meßwerte, um die Dosierventile über eine entsprechende Software zu steuern bzw. zu regeln.

Wird ein derartiges Brennstoffzellen-System nun in ein Kraftfahrzeug eingebaut, so ergibt sich der Nachteil, daß an zahlreichen Komponenten jeweils ein Dosierventil angeordnet ist, und daß dieses Dosierventil jeweils über die entsprechende Sensorik und Verkabelung und über entsprechende Leitungen zur Versorgung mit dem im allgemeinen zuvor komprimierten gasförmigen Medium versehen werden muß. Aufgrund der beim Einbau in ein Kraftfahrzeug häufig sehr beengten Verhältnisse, stellt dies einen erheblichen Nachteil dar und führt zu einem sehr hohen Aufwand bezüglich der zu verlegenden Leitungselemente für die Führung des komprimierten gasförmigen Mediums von einer Verdichtereinheit oder dergleichen zu den Dosierventilen. Außerdem entsteht ein erheblicher Nachteil bei der Verlegung und den erforderlichen Leitungslängen der jeweiligen Sensoren, welche jedem der Dosierventile zugeordnet werden müßten.

Weitere Nachteile entstehen bezüglich der thermischen Belastung der Dosierventile. Da die Dosierventile jeweils dicht bei der jeweiligen Komponente angeordnet sind, kommt es vor allem zu sehr unterschiedlichen Temperaturbelastungen der einzelnen Dosierventile. So wird beispielsweise ein im Bereich des Gaserzeugungssystems angeordnetes Dosierventil eine weitaus höhere thermische Belastung erfahren, als ein im Bereich unmittelbar vor der Brennstoffzelle angeordnetes Dosierventil. Beim Einsatz gleichartiger Dosierventile führt dies zu unterschiedlichen thermischen Ausdehnungen der Elemente der einzelnen Dosierventile und damit zu einem erheblichen Regelungsaufwand, da bei einer Ansteuerung dieser gleichartig aufgebauten und unterschiedlichen thermischen Bedingungen ausgesetzten Dosierventilen verschiedene Zusammenhänge zwischen Stoffdurchsatz, Steuerzeiten und den dafür jeweils erforderlichen elektrischen Kenngrößen entstehen können.

Es ist daher die Aufgabe der Erfindung; ein Brennstoffzellen-System mit einer Vorrichtung zum Dosieren eines gasförmigen Mediums mit mehreren Dosierventilen in mehrere Komponenten des Brennstoffzellen-Systems in einem Kraftfahrzeug zu schaffen, welche den erforderlichen Bauraum reduziert sowie unterschiedliche, insbesondere thermische, jedoch auch durch Vibrationen oder dergleichen auftretende Belastungen der Dosierventile vermeidet.

Erfindungsgemäß ist diese Aufgabe durch ein Brennstoffzellen-System mit den im Anspruch 1 genannten Merkmalen gelöst.

Durch den zentralen Mittelblock, an dem sämtliche Dosierventile angeordnet sind, ergeben sich erhebliche Vorteile bezüglich des Packagings des Brennstoffzellen-Systems in dem Kraftfahrzeug. Durch eine zentrale Anordnung der Dosierventile an dem Mittelblock und deren jeweiliger Verbindung zu dem wenigstens einen mit der wenigstens einen Eintrittsöffnung für das gasförmige Medium verbundenen Kanal an ihrer jeweiligen Anschlußstelle, entsteht ein zentrales Versorgungssystem, welches sämtliche Dosierventile über den zentralen Mittelblock mit dem unter einem Druck stehenden, beispielsweise über eine Verdichtereinheit zugeführten gasförmigen Medium, versorgt. Die erforderliche Leitungslänge zwischen der Verdichtereinheit und den einzelnen Dosierventilen, welche, um Druckverluste vor den Dosierventilen zu vermeiden, einen möglichst großen Durchmesser aufweisen soll, wird dabei auf ein Minimum reduziert und die Verteilung erfolgt in dem zentralen Mittelblock selbst.

Die bisher aufwendig verlegten Leitungen mit diesem möglichst großen Durchmesser, welche gegebenenfalls zusammen mit zusätzlichen Meßleitungen der in einer Nähe der Dosierventile plazierten Sensorik versehen sind, verursachten einen erheblichen Platzaufwand und sorgten für ein "Leitungs-Chaos" in dem Brennstoffzellen-System. Dagegen müssen bei dem erfindungsgemäßen Aufbau, bei dem sämtliche Dosierventile zentralisiert sind, lediglich die mit einem sehr viel geringeren Durchmesser versehenen Leitungen zur Förderung des dosierten Mediums verlegt werden, wobei sich sämtliche Sensorik auf den Bereich der zentralen Dosiereinrichtung konzentrieren kann.

Neben diesen erheblichen Vorteilen der erfindungsgemäßen Vorrichtung bezüglich des Packagings ergeben sich weitere Vorteile durch die zentrale Anordnung aller Dosierventile des Brennstoffzellen-Systems an einer Stelle dieses Systems. Sämtliche Dosierventile sind dadurch, daß sie sich in einem räumlich sehr kleinen Bereich befinden, in etwa den gleichen äußeren Bedingungen, also derselben Temperatur, denselben Einwirkungen über Erschütterungen und Vibrationen und dergleichen, ausgesetzt, so daß bei einer entsprechenden Steuerung der Dosierventile eine vergleichbare Funktionsweise jeder der einzelnen Dosierventile untereinander sichergestellt werden kann.

Ein weiterer Vorteil des erfindungsgemäßen Aufbaus liegt außerdem darin, daß durch zentrale Anordnung der Dosierventile um den Mittelblock die Dosierventile beispielsweise in eine für eine gegebenenfalls erforderliche Wartung der Dosierventile sehr günstige Position innerhalb des Brennstoffzellen-Systems gebracht werden können.

In einer besonders günstigen Ausführungsform der Erfindung sind in dem wenigstens einen Kanal Sensoren angebracht, durch welche Zustandsgrößen des gasförmigen Mediums erfaßbar sind.

Dadurch ergibt sich der Vorteil, daß über einen einzigen Satz Sensoren für den wenigstens einen Kanal eine zentrale Messung durchführbar ist, so daß für sämtliche der eingesetzten Dosierventile relativ gute charakteristische Werte des dem Dosierventil zugeführten gasförmigen Mediums ermittelt werden können. Durch die nur sehr kurzen Leitungslängen, welche im Bereich des Mittelblocks zwischen den Sensoren und den jeweiligen Anschlußstellen der Dosierventile vorkommen, kommt es hierdurch praktisch zu keinerlei Verfälschung der gemessenen Zustandsgrößen des zugeführten gasförmigen Mediums.

Weitere vorteilhafte Ausgestaltungen der Erfindung ergeben sich aus den Unteransprüchen und dem anhand der Zeichnung nachfolgend dargestellten Ausführungsbeispiel.

Es zeigt:
- Fig. 1: einen Aufbau der erfindungsgemäßen Vorrichtung mit Dosierventilen in einer dreidimensionalen Darstellung;
- Fig. 2: eine Explosionsdarstellung eines zentralen Mittelblocks, mit Brückenelementen sowie Anschlußelementen;
- Fig. 3: eine Draufsicht auf die erfindungsgemäße Vorrichtung gemäß dem Pfeil III in Fig. 1 ohne die Dosierventile;
- Fig. 4: einen Querschnitt gemäß der Linie IV-IV in Fig. 3; und
- Fig. 5: eine vergrößerte Darstellung des Details V in Fig. 4.

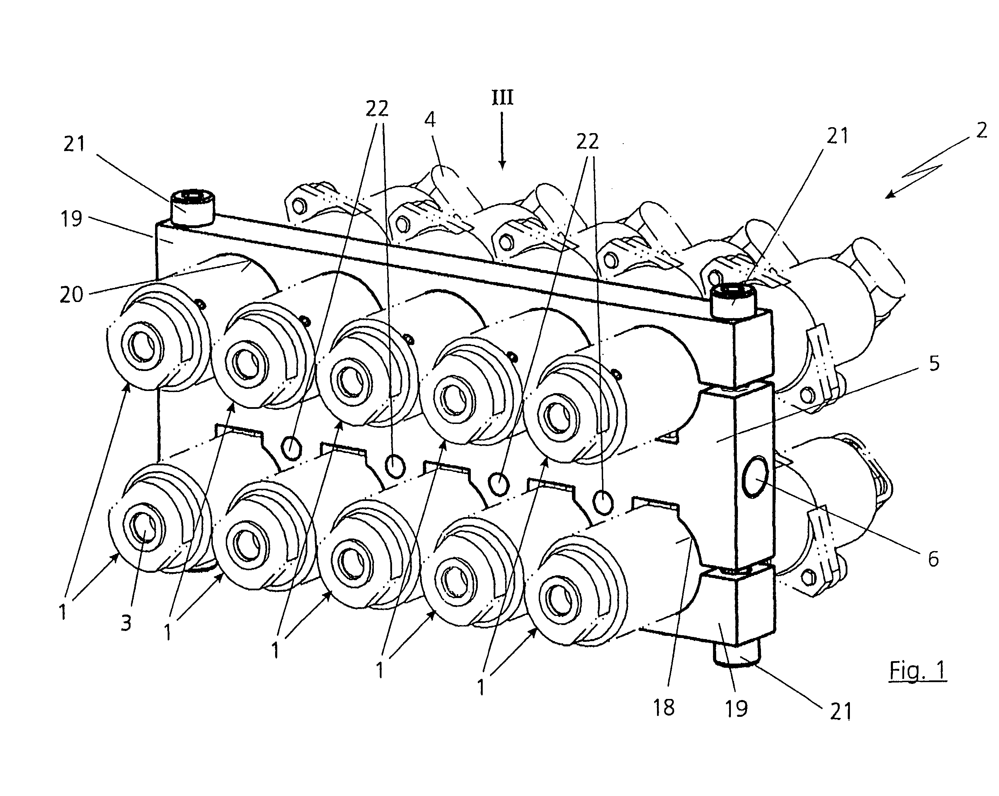

Fig. 1 zeigt einen entsprechenden Aufbau einer Vorrichtung mit strich-zwei-punktiert angedeuteten Dosierventilen 1, welche an sich bekannt sind und von welchen in dem in Fig. 1 dargestellten Ausführungsbeispiel zehn Stück zu einer zentralen Dosiereinheit 2 zusammengefaßt sind.

Selbstverständlich wären auch andere Aufbauten der Dosiereinheit 2, beispielsweise mit mehr oder weniger Dosierventilen 1, denkbar. Der sinnvolle Aufbau einer derartigen Dosiereinheit 2 wäre beispielsweise eine Dosiereinheit 2 mit drei Dosierventilen 1, welche dann jeweils in einem Abstand von beispielsweise 90° zueinander angeordnet wären. Der verbleibende vierte Anschluß könnte dann über einen Blindstopfen verschlossen werden.

Auch bei der in Fig. 1 dargestellten Dosiereinheit 2 sind selbstverständlich Variationen denkbar, so daß beispielsweise eines oder mehrere der Dosierventile 1 weggelassen werden könnte, wobei dieses Dosierventil 1 dann lediglich durch einen Blindstopfen (nicht dargestellt) ersetzt werden müßte.

Die Funktionsweise der einzelnen Dosierventile 1 soll hier nicht weiter erläutert werden, da diese prinzipiell bekannt ist und den erfindungsgemäßen Aufbau nicht weiter betrifft. Lediglich so viel sei erwähnt, daß jedes der Dosierventile 1 eine Auslaßöffnung 3 aufweist, durch welche der dosierte Volumenstrom des gasförmigen Mediums abgegeben wird und von welchem er über die in ihrem Durchmesser vergleichsweise kleinen Leitungselemente (nicht dargestellt) zu den jeweiligen Komponenten des Brennstoffzellen-Systems geführt werden kann. Zur Ansteuerung der Dosierventile 1 weist jedes dieser Dosierventile 1 einen elektrischen Steckanschluß 4 auf, durch welchen es mit der entsprechenden Elektronik zur Steuerung bzw. Regelung des Dosierventils 1 bzw. der Dosiermenge, z.B. über einen elektromagnetischen oder elektromechanischen Aktuator, verbindbar ist.

Das zentrale Funktionselement der Dosiereinheit 2 stellt ein zentraler Mittelblock 5 dar. Über eine Eintrittsöffnung 6 gelangt das gasförmige Medium von einem nicht dargestellten Kompressor oder dergleichen über ein ebenfalls nicht dargestelltes Leitungselement in den zentralen Mittelblock 5. In dem Mittelblock 5 ist ein Kanal 7 angeordnet, welcher die Eintrittsöffnung 6 mit den jeweiligen Anschlußstellen 8 für die jeweiligen Dosierventile 1 verbindet.

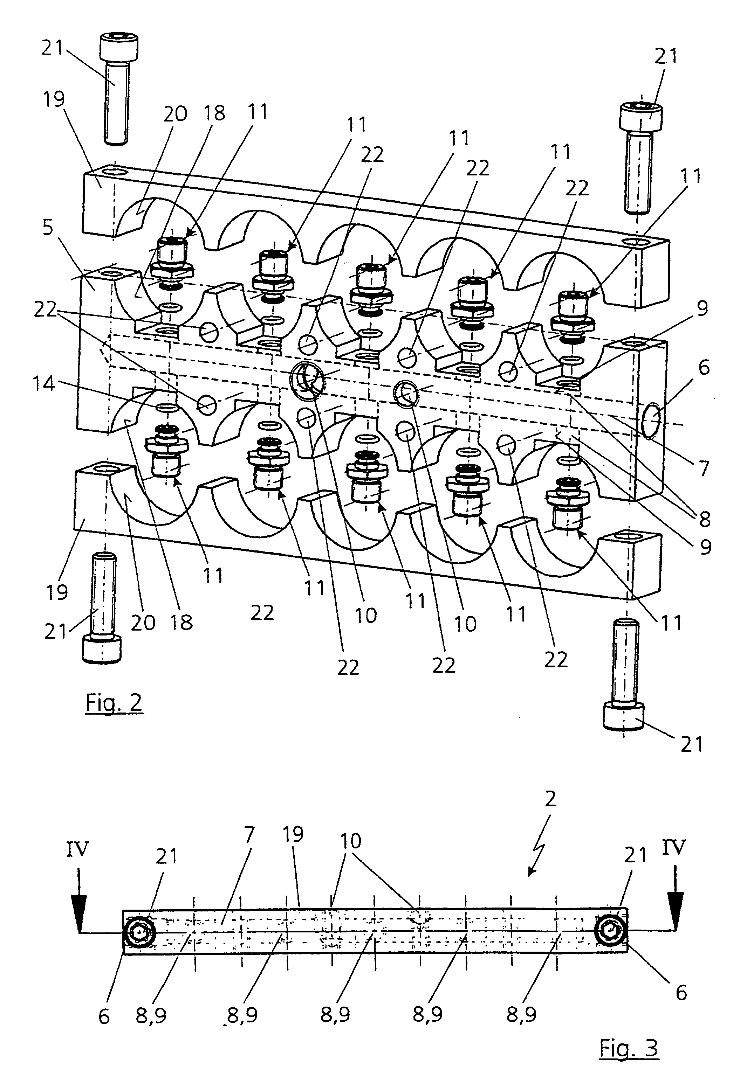

Dieser Aufbau ist in der Explosionsdarstellung in Fig. 2, bei der zur Vereinfachung auf die Darstellung der Dosierventile 1 verzichtet wurde, nochmals besser zu erkennen. In dem zentralen Mittelblock 5 ist die Eintrittsöffnung 6 erkennbar, an welche sich der gestrichelt angedeutete Kanal 7 anschließt. Die ebenfalls gestrichelt angedeuteten Anschlußstellen 8 für die jeweiligen Dosierventile 1 sind dabei über quer zu dem Kanal 7 verlaufende Bohrungen 9 realisiert.

Zusätzlich hat der Mittelblock 5 zwei zentral angeordnete Öffnungen 10, in welche nicht dargestellte Sensoren zur Erfassung der Zustandsgrößen des gasförmigen Mediums vor den Dosierventilen 1, hier insbesondere Druck und Temperatur, eingesetzt werden können.

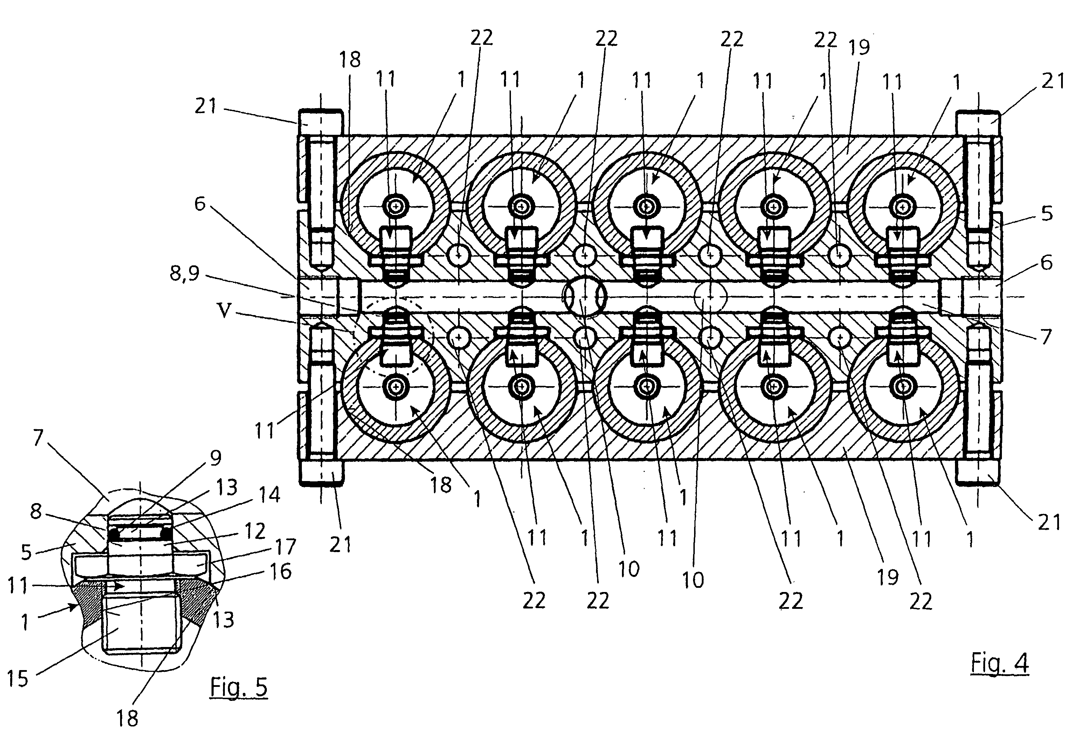

Außerdem zeigt die Darstellung in Fig. 2 Anschlußelemente 11 der Dosierventile 1. Der exakte Aufbau dieser Anschlußelemente 11 ist nachfolgend bereits beschrieben, die entsprechenden Bezugszeichen sind aus Gründen der Übersichtlichkeit jedoch erst in Fig. 5 näher dargestellt. Auf ihrer dem Mittelblock 5 zugewandten Seite weisen die Anschlußelemente 11 eine zylindrische Ausbildung 12 auf, welche mit einer Nut 13 für eine Dichtung 14, hier eine O-Ringdichtung 14, versehen ist. Die dem Mittelblock 5 abgewandte Seite der Anschlußelemente 11 weist ein Gewinde 15 auf, welches in eine entsprechende Einlaßöffnung 16 jedes Dosierventils 1 eingeschraubt wird. Um dieses Einschrauben mittels eines entsprechenden Werkzeugs zu erleichtern, weist jedes der Anschlußelemente 11 außerdem einen in der Art eines Sechskants ausgebildeten Bereich 17 auf.

Bei einer Montage der Dosiereinheit 2 können dann die hier nicht dargestellten Dosierventile 1, welche bereits mit den Anschlußelementen 11 verschraubt sind, mit den zylindrischen Ausbildungen 12 der Anschlußelemente in die Bohrungen 9 der Anschlußstellen 8 eingesteckt werden. Die Dosierventile 1 kommen dabei zumindest teilweise formschlüssig an kreissegmentförmigen Aussparungen 18 des Mittelblocks 5 zu liegen. Danach wird ein Brückenelement 19, welches ebenfalls kreissegmentförmige Aussparungen 20 aufweist, über die einzelnen Dosierventile gelegt und danach über Befestigungsmittel 21, hier zwei Schrauben 21, mit dem Mittelblock 5 verbunden. Auch hier kommt es zu einer formschlüssigen Anlage der kreissegmentförmigen Aussparungen 20 des Brückenelements 19 an den Dosierventilen 1. Ein vergleichbarer Ablauf findet sich auch auf der gegenüberliegenden Seite des Mittelblocks 5, so daß in einem Ausführungsbeispiel gemäß Fig. 1 und Fig. 2 dann zehn der Dosierventile 1 zu der Dosiereinheit 2 zusammengefaßt sind.

In Fig. 3 ist eine Draufsicht gemäß dem Pfeil III in Fig. 1 auf die Dosiereinheit 2 erkennbar, wobei auch hier auf eine Darstellung der Dosierventile 1 verzichtet wurde. Dabei sind die in Fig. 1 und Fig. 2 bereits genannten Elemente mit den jeweils gleichen Bezugszeichen versehen.

Fig. 4 zeigt einen Querschnitt durch diesen Aufbau gemäß Fig. 3, wobei hier wiederum die Dosierventile 1 ebenfalls in einem Querschnitt dargestellt wurden, um das Zusammenwirken zwischen Dosierventilen 1 und Anschlußelementen 11 näher zu erläutern.

Dabei sind hier lediglich die bereits beschriebenen und mit den entsprechenden Bezugszeichen versehen Komponenten nochmals zu erkennen. Der Aufbau gemäß Fig. 4 zeigt jedoch eine zweite Eintrittsöffnung 6 in den Kanal 7, so daß hier beispielsweise von beiden Seiten das gasförmige Medium zugeführt werden kann, oder es kann die für das Packaging jeweils günstigere Seite ausgewählt werden, wobei die jeweils andere Eintrittsöffnung 6 dann über einen Blindstopfen (nicht dargestellt) verschlossen werden muß.

Außerdem sind in Fig. 4 die bisher noch nicht erläuterten Befestigungsbohrungen 22 durch den zentralen Mittelblock 5 erkennbar, welche in keinem funktionellen Zusammenhang mit der Dosiereinheit 2 stehen, sondern lediglich zu einer Befestigung des Mittelblocks 5 an entsprechenden Trägerelementen des Brennstoffzellen-Systems oder Fahrzeugs dienen.

Fig. 5 zeigt in einer vergrößerten Darstellung des Details V in Fig. 4 nochmals den genauen Aufbau der Anschlußelemente 11. Diese weisen, wie bereits beschrieben, auf ihrer dem Mittelblock 5 zugewandten Seite die zylindrische Ausbildung 12 auf, welche sich beispielsweise aus einem Standardanschlußelement, welches zwei Gewinde und den als Sechskant 17 ausgebildeten Bereich aufweist, durch ein Abdrehen des einen Gewindes einfach herstellen läßt. Im Zuge dieses Drehvorgangs kann dann außerdem die Nut 13 in die zylindrische Ausbildung 12 eingedreht werden, welche dann die Dichtung 14, beispielsweise eine O-Ringdichtung 14, aufnimmt. Ansonsten sei hier nochmals auf den oben bereits erläuterten Aufbau und die Funktionsweise des Anschlußelements 11 bei der Montage der Dosierventile 1 in den Mittelblock 5 hingewiesen.

## Patentansprüche

1. Brennstoffzellen-System in einem Kraftfahrzeug, mit einer Vorrichtung (2) zum Dosieren eines gasförmigen Mediums, insbesondere Luft, die mehrere Dosierventile (1) in mehreren Komponenten des Brennstoffzellen-Systems aufweist, wobei sämtliche Dosierventile (1) an einem zentralen Mittelblock (5) angeordnet sind und der Mittelblock (5) wenigstens eine Eintrittsöffnung (6) für das gasförmige Medium aufweist, welche über wenigstens einen Kanal (7) mit jeweils einer Anschlussstelle (8) für jedes der Dosierventile (1) verbunden ist.

2. Brennstoffzellen-System nach Anspruch 1,
**dadurch gekennzeichnet, dass**
Anschlusselemente (11) an Einlassöffnungen (16) der Dosierventile (1) jeweils mit einer der Anschlussstellen (8) des Mittelblocks (5) dichtend im Eingriff stehen.

3. Brennstoffzellen-System nach Anspruch 1 oder 2,
**dadurch gekennzeichnet, dass**
in dem wenigstens einen Kanal (7) Sensoren angeordnet sind, durch welche Zustandsgrößen des gasförmigen Mediums erfaßbar sind.

4. Brennstoffzellen-System nach Anspruch 3
**dadurch gekennzeichnet, daß**
die Sensoren als wenigstens ein Drucksensor und wenigstens ein Temperatursensor ausgebildet sind, welche in zentralen Öffnungen (10) des Kanals (7) in dem Mittelblock (5) angeordnet sind.

5. Brennstoffzellen-System nach einem der Ansprüche 2 bis 4,
**dadurch gekennzeichnet, daß**
die Anschlußstellen (8) als Bohrungen (9) ausgebildet sind, wobei die Anschlußelemente (11) auf ihrer dem Mittelblock (5) zugewandten Seite eine zylindrische Ausbildung (12) aufweisen und mit der zylindrischen Ausbildung (12) in die Bohrungen einsteckbar sind.

6. Brennstoffzellen-System nach Anspruch 5,
**dadurch gekennzeichnet, daß**
die zylindrischen Ausbildungen (12) jedes Anschlußelements (11) wenigstens eine Dichtung (14) aufweisen.

7. Brennstoffzellen-System nach Anspruch 2 bis 6,
**dadurch gekennzeichnet, daß**
die Anschlußelemente (11) auf ihrer dem Mittelblock (5) abgewandten Seite mit den Einlaßöffnungen (16) der Dosierventile (1) verschraubt sind.

8. Brennstoffzellen-System nach einem der Ansprüche 1 bis 7,
**dadurch gekennzeichnet, daß**
der Mittelblock (5) in den die Anschlußstellen (8) umgebenden Bereichen Ausnehmungen (18) aufweist, in welchen die Dosierventile (1) wenigstens teilweise formschlüssig anliegen.

9. Brennstoffzellen-System nach einem der Ansprüche 1 bis 8,
**dadurch gekennzeichnet, daß**
die Dosierventile (1) über Befestigungseinrichtungen an dem Mittelblock (5) befestigt sind.

10. Brennstoffzellen-System nach Anspruch 9,
**dadurch gekennzeichnet, daß**
die Befestigungseinrichtung als jeweils mehrere Dosierventile (1) überspannendes Brückenelement (19) ausgebildet ist, wobei das Brückenelement (19) mit wenigstens einem Befestigungsmittel (21) an dem Mittelblock (5) befestigbar ist.

11. Brennstoffzellen-System nach Anspruch 10,
**dadurch gekennzeichnet, daß**
das Brückenelement (19) Ausnehmungen (20) aufweist, in welchen die Dosierventile (1) wenigstens teilweise formschlüssig anliegen.

12. Brennstoffzellen-System nach einem der Ansprüche 1 bis 11,
**dadurch gekennzeichnet, daß**
ein Durchmesser der Eintrittsöffnungen (6) deutlich größer ist als ein Durchmesser der jeweiligen Anschlußstellen (8).

## Claims

1. Fuel cell system in a motor vehicle, comprising a device (2) for dosing a gaseous medium, in particular air, including several metering valves (1) in several components of the fuel cell system, wherein all metering valves (1) are arranged on a central center block (5) and the center block (5) includes at least one entrance opening (6) for the gaseous medium, which in each case is connected, via at least one channel (7), with a tie-in point (8) for each of the metering valves (1).

2. Fuel cell system according to claim 1, **characterized in that**
connecting elements (11) on inlet openings (16) of the metering valves (1) are respectively engaging one of the tie-in points (8) of the center block (5) in sealing manner.

3. Fuel cell system according to claim 1 or 2, **characterized in that**
sensors are arranged in the at least one channel (7), by means of which state variables of the gaseous medium are measurable.

4. Fuel cell system according to claim 3, **characterized in that**
the sensors are formed as at least one pressure sensor and at least one temperature sensor, which are arranged in central openings (10) of the channel (7) in the center block (5).

5. Fuel cell system according to one of the claims 2 to 4, **characterized in that**
the tie-in points (8) are formed as bores (9), wherein the connecting elements (11) include, on their side facing the center block (5), a cylindrical formation and are insertable into the bores by means of the cylindrical formation (12).

6. Fuel cell system according to claim 5, **characterized in that**
the cylindrical formations (12) of each connecting element (11) include at least one seal (14).

7. Fuel cell system according to claims 2 to 6, **characterized in that**
the connecting elements (11) are screwed, on their side turned away from the central block (5), on the inlet openings (16) of the metering valves (1).

8. Fuel cell system according to one of the claims 1 to 7, **characterized in that**
the central block (5) includes, in the portions surrounding the tie-in points (8), recesses (18), in which the metering valves (1) at least partially positively fit.

9. Fuel cell system according to one of the claims 1 to 8, **characterized in that**
the metering valves (1) are mounted on the center block (5) by fastening device.

10. Fuel cell system according to claim 9, **characterized in that**
the fastening device is formed as bridging element (19) respectively bridging over several metering valves (1), wherein the bridging element (19) is mountable on the center block (5) by at least one fastening means (21).

11. Fuel cell system according to claim 10, **characterized in that**
the bridging element (19) includes recesses (20), in which the metering valves (1) at least partially positively fit.

12. Fuel cell system according to one of the claims 1 to 11, **characterized in that**
a diameter of the entrance openings (6) is significantly larger as a diameter of the respective tie-in points (8).

## Revendications

1. Système de piles à combustible pour voiture, pourvu d'un dispositif (2) servant à doser un agent gazeux, particulièrement de l'air, et présentant plusieurs soupapes de réglage
(1) placées dans plusieurs composants du système de piles à combustible, toutes les soupapes de réglage (1) étant disposées sur un bloc central (5) et le bloc central (5) présentant au moins une ouverture d'entrée (6) prévue pour l'agent gazeux, laquelle ouverture est reliée par au moins un canal (7) à chaque point de raccordement (8) de chaque soupape de réglage (1).

2. Système de piles à combustible selon la revendication 1,
**caractérisé en ce que**
les éléments de raccordement (11) sont, aux ouvertures d'admission (16) des soupapes de réglage (1), respectivement en prise de manière étanche avec un des points de raccordement (8) du bloc central (5).

3. Système de piles à combustible selon la revendication 1 ou 2,
**caractérisé en ce que**
des capteurs permettant la saisie des grandeurs d'état de l'agent gazeux sont placés dans ledit au moins un canal (7).

4. Système de piles à combustible selon la revendication 3,
**caractérisé en ce que**
les capteurs sont conçus de manière à former pour le moins un capteur de pression et pour le moins un capteur de température, lesquels sont placés dans les ouvertures centrales (10) du canal (7) traversant le bloc central (5).

5. Système de piles à combustible selon l'une des revendications 2 à 4,
**caractérisé en ce que**
les points de raccordement (8) se présentent sous la forme d'alésages (9), les éléments de raccordement (11) affichant sur leur côté tourné vers le bloc central (5) une configuration cylindrique (12) et pouvant s'emmancher dans les alésages à l'aide de ladite configuration cylindrique (12).

6. Système de piles à combustible selon la revendication 5,
**caractérisé en ce que**
la configuration cylindrique (12) de chaque élément de raccordement (11) présente pour le moins un joint (14).

7. Système de piles à combustible selon la revendication 2 à 6,
**caractérisé en ce que**
les éléments de raccordement (11) sont, sur leur côté opposé au bloc central (5), vissés aux ouvertures d'admission (16) des soupapes de réglage (1).

8. Système de piles à combustible selon l'une des revendications 1 à 7,
**caractérisé en ce que**
le bloc central (5) présente dans les zones entourant les points de raccordement (8) des réservations (18) auxquelles les soupapes de réglage (1) adhèrent pour le moins partiellement par fermeture géométrique.

9. Système de piles à combustible selon l'une des revendications 1 à 8,
**caractérisé en ce que**
les soupapes de réglage (1) sont fixées au bloc central (5) par des dispositifs de fixation.

10. Système de piles à combustible selon la revendication 9,
**caractérisé en ce que**
le dispositif de fixation se présente sous la forme d'un élément en forme de pont (19) passant à chaque fois au-dessus de plusieurs soupapes de réglage (1), l'élément en forme de pont (19) pouvant être fixé avec au moins un moyen de fixation (21) au bloc central (5).

11. Système de piles à combustible selon la revendication 10,
**caractérisé en ce que**
l'élément en forme de pont (19) présente des réservations (20) auxquelles les soupapes de réglage (1) adhèrent pour le moins partiellement par fermeture géométrique.

12. Système de piles à combustible selon l'une des revendications 1 à 11,
**caractérisé en ce que**
un diamètre des ouvertures d'entrée (6) est nettement supérieur au diamètre de chaque point de raccordement (8).
